# FASCICULE DE BREVET EUROPEEN

(11) **EP 0 823 991 B1**
(45) Date de publication et mention de la délivrance du brevet: **04.12.2002**
(21) Numéro de dépôt: 97420145.1
(22) Date de dépôt: 13.08.1997
(51) Int. Cl.: A01J 25/13

(54) **Bloc-moule à fonctions multiples pour la fabrication de fromages**
Multifunktions-Form zur Herstellung von Käse
Multi-functions mould for the manufacturing of cheese

(30) Priorité: 14.08.1996 FR 9610318
(43) Date de publication de la demande: 18.02.1998
(73) Titulaire: CHALON MEGARD, 01460 Montreal la Cluse (FR)
(72) Inventeur: Caldognetto, Michel, 01130 Nantua (FR)
(74) Mandataire: Maureau, Philippe

(56) Documents cités:
- EP-A- 0 559 584
- FR-A- 2 429 555
- FR-A- 2 599 216

## Description

La présente invention concerne un bloc-moule pour la fabrication de fromages, ce bloc-moule intervenant plus particulièrement au cours des opérations d'égouttage, d'acidification, de saumurage et de formation complémentaire du croûtage, avec ou sans emmorgeage, et éventuellement dans le cas de certains types de fromages pour le pressage.

Ces fromages peuvent être du type : à pâte molle, à pâte pressée (type St-Nectaire, Reblochon...), à pâte persillée.

Pour ce genre de fabrications fromagères, on connaît déjà des bloc-moules à fond en une pièce, constitués de moules unitaires micro-perforés assemblés entre eux, permettant de réaliser le pressage et l'égouttage des fromages, lesquels bloc-moules sont complétés dans la deuxième phase de la fabrication par la mise en place des fromages dans les bacs en matière plastique permettant de former des piles de bacs, lesquelles piles interviennent depuis le pressage jusqu'à la fin des opérations précédemment citées.

Dans le système avec utilisation des bacs, ces fromages relativement "mous" nécessitent l'usage de pièces complémentaires, en particulier un treillis en matière plastique s'interposant entre le fromage et le fond du bac et une virole en matière plastique, appelée communément ceinture d'acidification, glissée autour du talon du fromage de façon à éviter à celui-ci de se déformer.

Au cours des diverses opérations, de nombreuses manutentions interviennent :
- Enlèvement de la ceinture d'acidification avant saumurage,
- Retournement manuel des fromages dans les bacs avant saumurage,
- Retournement manuel des fromages dans les bacs après saumurage,
- Enlèvement manuel des fromages des bacs pour les opérations d'emmorgeage,
- Remise en place manuelle des fromages dans les bacs après emmorgeage.

Lors des opérations d'emmorgeage, les fromages sont frottés plusieurs fois, soit manuellement, soit au moyen de machines mécanisées spécialement prévues à cet effet.

Ces opérations s'étalent en général sur environ 4 à 6 jours, cette durée étant variable suivant le type de fromages.

Des bloc-moules pour la fabrication de fromages sont connus, par exemple, par les documents FR-A-2599216 et EP-A-0559584. Dans le cas du document FR-A-2599216, chaque moule unitaire du bloc-moule possède un fond ondulé, non perforé, raccordé par un arrondi à une paroi latérale constituée par une jupe cylindrique, pourvue d'ouvertures. De plus, ce document FR-A-2599216, qui sert de base du préambule de la revendication 1, prévoit que le fond d'un moule unitaire est prolongé vers le bas par une partie inférieure avec un arrondi opposé au précédent, une rainure annulaire d'emboîtage pour la partie supérieure d'un moule unitaire appartenant à un bloc-moule inférieure, et un cône d'auto-centrage.

Dans le cas du document EP-A-0559584, chaque moule unitaire du bloc-moule possède un fond plat, perforé sur toute son étendue, qui est raccordé à une paroi latérale perforée.

Le but de la présente invention est de réaliser un bloc-moules très simple d'utilisation permettant :
- un retournement par piles,
- un égouttage parfait,
- un saumurage parfait,
- une formation de croûte,
- une formation de morge, sans sortir les fromages du bloc-moule tout au long de ces opérations.
A cet effet, l'invention a essentiellement pour objet un bloc-moule à fonctions multiples pour la fabrication de fromages, plus particulièrement pour les opérations d'égouttage, d'acidification, de saumurage et de formation des croûtes, avec ou sans emmorgeage, dans la fabrication des fromages à pâte molle et/ou à pâte pressée et/ou à pâte persillée, le bloc-moule étant constitué par l'assemblage de moules unitaires dans un plan horizontal et étant lui-même empilable avec des bloc-moules identiques pour former une pile retournable, chaque moule unitaire comprenant une paroi latérale supérieure et un fond relié à la paroi latérale par un arrondi, et ce fond étant prolongé vers le bas par une partie verticale inférieure avec un arrondi opposé au précédent, une rainure annulaire d'emboîtage dans laquelle la partie supérieure d'un moule unitaire d'un bloc-moule inférieur vient s'emboîter, et un cône d'auto-centrage prévu entre l'arrondi et la rainure, de façon à assurer une parfaite continuité entre la paroi latérale supérieure du moule inférieur et l'arrondi inférieur du moule supérieur, ce bloc-moule étant caractérisé en ce que le fond de chaque moule unitaire est un fond plat, perforé sur toute son étendue, et ce en ce que la paroi latérale supérieure de chaque moule unitaire est constituée d'une toile tramée en matière plastique très fortement ajourée, supportée par des renforts annulaires horizontaux reliés entre eux par des supports verticaux, un épaulement annulaire permettant à la toile tramée d'être à son bord inférieur, encastrée et en parfaite continuité avec l'arrondi liant le fond à la paroi latérale.

La constitution de ce bloc-moule, notamment de sa partie supérieure, permet de changer très facilement et économiquement le type de toile tramée, lors de la fabrication du bloc-moule, en fonction du type de fromage auquel est destiné ce bloc-moule.

La structure des bloc-moules proposée par l'invention permet aussi une très bonne perméabilité de chaque moule unitaire avec un drainage parfait de la face inférieure et du talon du fromage lors de l'égouttage, une très bonne perméabilité lors de l'opération de saumurage et une très importante circulation d'air lors de la formation du croûtage et éventuellement de l'emmorge avant mise sur planches en cave. Dans le cas de fabrication de fromages très humides du type Reblochon, le "corset" dans lequel le fromage est tenu, permet d'assurer d'une façon parfaite toutes ces opérations, sans manutention avec une tenue parfaite du produit, sachant qu'au cours des opérations d'acidification, de formation du croûtage et d'emmorgeage, les piles de bloc-moules sont fréquemment retournées.

Selon un mode de réalisation préférentiel, il est prévu que la toile tramée, constituant la paroi latérale supérieure de chaque moule unitaire, est une toile tramée en matière plastique très fortement ajourée, à très fort coefficient de perméabilité, qui est solidarisée de façon permanente avec la structure à renforts annulaires, notamment par l'intermédiaire d'un assemblage par soudure.

De toute façon, l'invention sera mieux comprise à l'aide de la description qui suit, en référence au dessin schématique annexé représentant, à titre d'exemple, une forme d'exécution de ce bloc-moule pour la fabrication de fromages.
Figure 1 est une vue en coupe verticale, passant par l'axe d'un moule unitaire appartenant à un bloc-moule conforme à la présente invention en dehors du champ des renforts de liaison verticaux ;
Figure 2 est une vue en coupe verticale, passant par l'axe d'un moule unitaire appartenant à un bloc-moule conforme à la présente invention, dans le champ des renforts de liaison verticaux ;
Figure 3 est une vue en coupe verticale, passant par une rangée de moules unitaires du bloc-moule, suivant III-III de figure 4 ;
Figure 4 est une vue en plan par dessus du bloc-moule complet dont les figures 1 et 2 représentent l'élément de base ;
Figure 5 est une vue en coupe verticale d'un assemblage de deux moules unitaires superposés, appartenant respectivement à un bloc-moule supérieur et à un bloc-moule inférieur, la coupe passant par l'axe de ces moules, dans le champ des renforts de liaison verticaux.

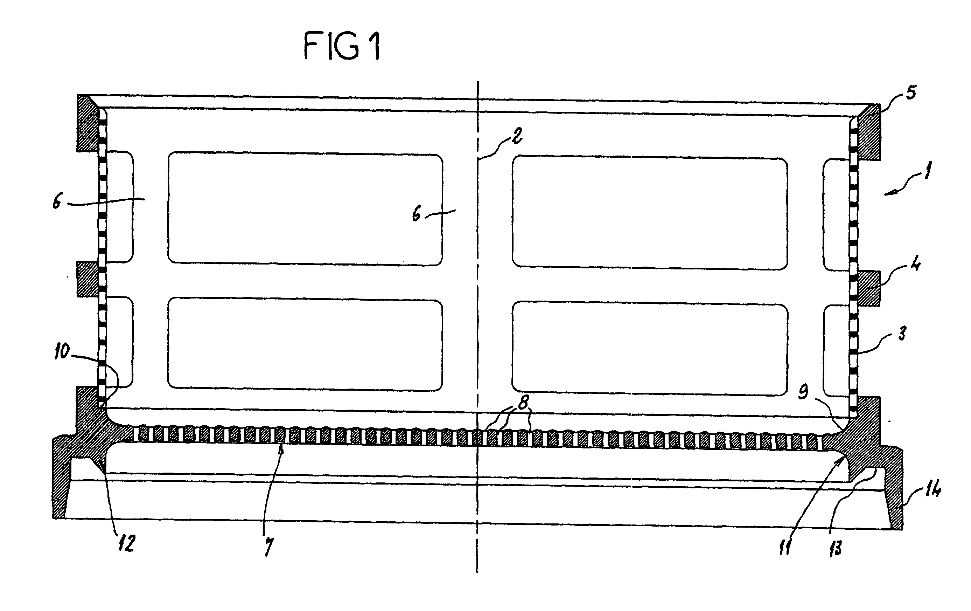

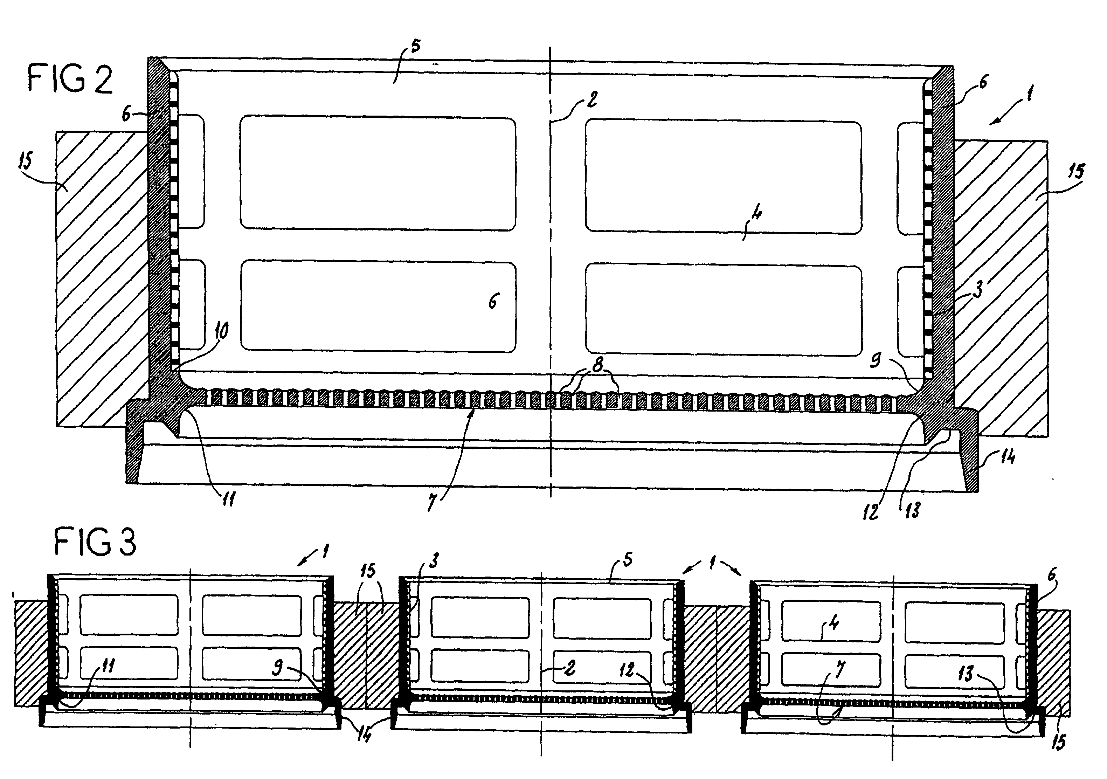

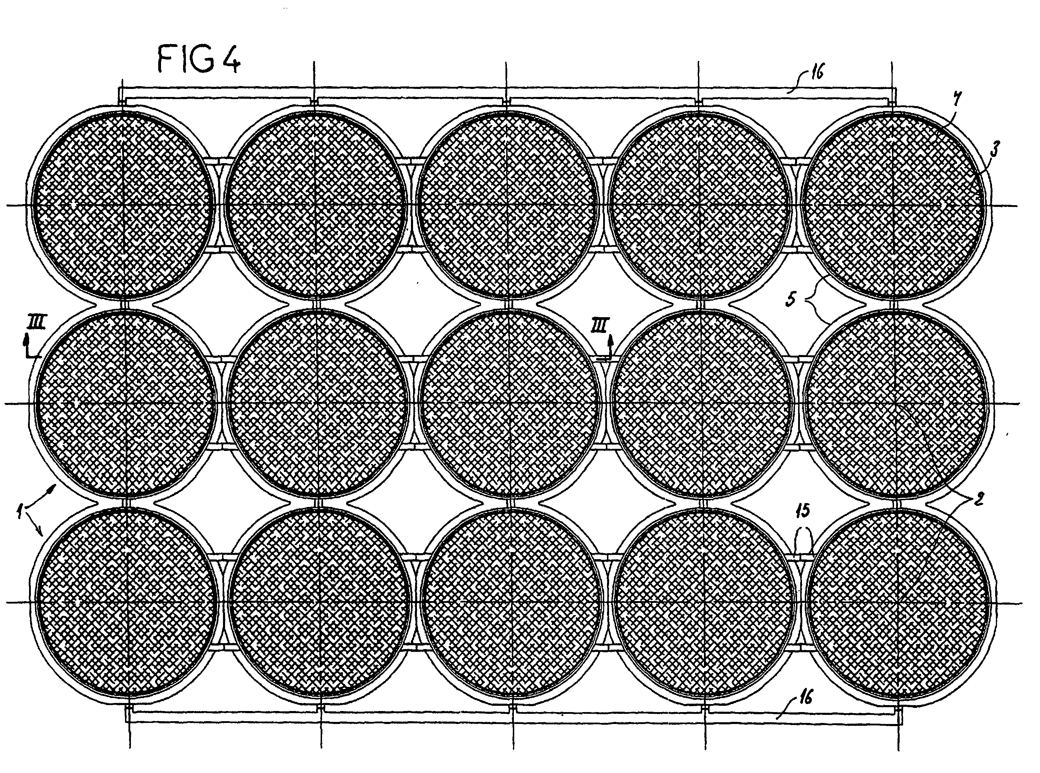

Les figure 1 et 2 montrent un moule unitaire 1 constituant l'élément de base d'un bloc-moule représenté sur les figure 3 et 4. Le moule unitaire est ici prévu pour la fabrication d'un fromage de forme générale cylindrique, à base circulaire, et il possède une forme correspondante.

Ainsi le moule unitaire 1 comprend une partie supérieure de forme générale cylindrique dont l'axe vertical est indiqué en 2. Cette partie supérieure possède une paroi latérale cylindrique 3 constituée d'une toile tramée en matière plastique très fortement ajourée supportée par des renforts annulaires 4 et 5, reliés entre eux par des renforts verticaux 6, et un fond plat circulaire 7 dans lequel sont ménagés de très nombreux trous 8, répartis sur l'étendue du fond 7. Ce fond 7 est relié à la toile tramée 3 par un arrondi 9, se terminant à son sommet par un épaulement annulaire 10 dans lequel est encastré le bord inférieur de la toile tramée 3. Ainsi, il existe une parfaite continuité de surface entre la face intérieure de la toile tramée 3 et l'arrondi 9.

Quant à la partie inférieure du moule unitaire 1, située sous le fond 7, celle-ci comporte concentriquement, de l'intérieur vers l'extérieur (par référence à l'axe vertical 2) : un arrondi 11 inférieur, opposé à l'arrondi 9 précédemment mentionné, un cône d'auto-centrage 12, une rainure annulaire et d'emboîtage 13, et une collerette périphérique d'emboîtage 14 légèrement conique intérieurement.

Les moules unitaires 1, réalisés comme décrit ci-dessus, sont assemblés entre eux dans un plan horizontal au moyen de tasseaux d'assemblage 15 prévus à leur périphérie et soudés entre eux, pour former un bloc-moule complet, comprenant des rangées longitudinales et transversales de moules unitaires 1, comme montré sur la figure 3 (coupe passant par un alignement de tasseaux d'assemblage 15) et sur la figure 4 (représentant le bloc-moule complet). Ce bloc-moule est lui-même renforcé latéralement par des barrettes d'assemblage longitudinales 16, soudées contre les rangées longitudinales extérieures de moules unitaires 1.

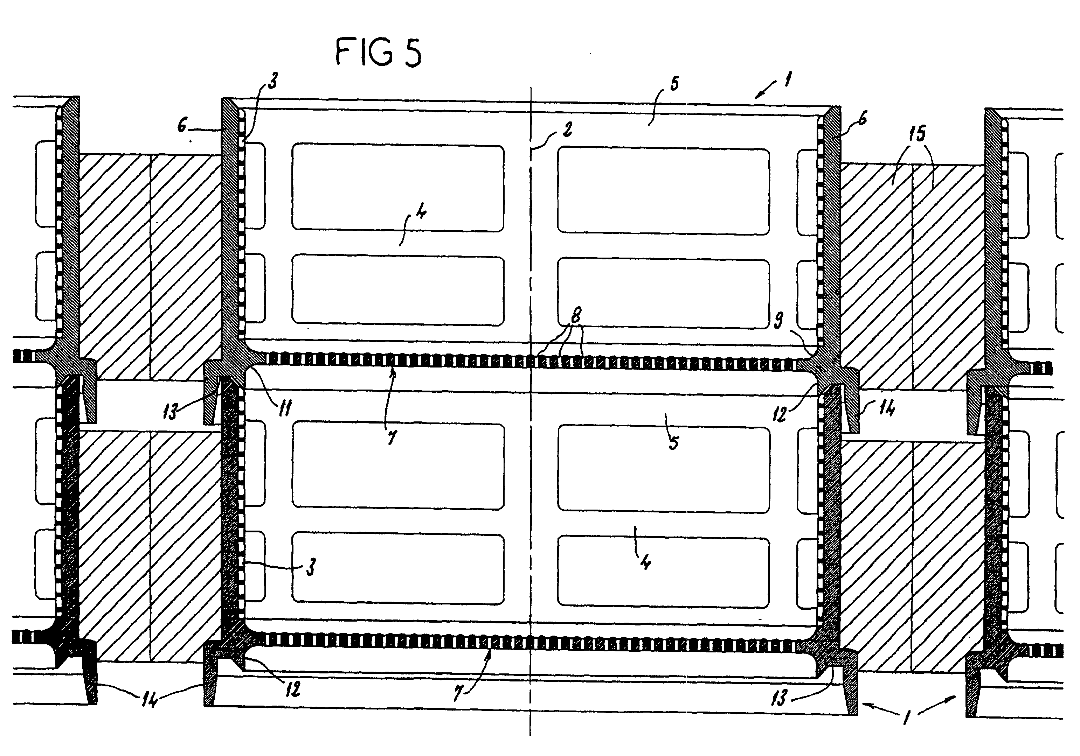

Lorsque plusieurs bloc-moules ainsi réalisés sont empilés, comme montré sur la figure 5, les renforts annulaires supérieurs 5 des parties supérieures des moules unitaires 1 d'un bloc-moule viennent s'emboîter dans les rainures annulaires correspondantes 13 formées en partie inférieure des moules unitaires 1 du bloc-moule immédiatement supérieur, l'emboîtage étant facilité par l'existence du cône d'auto-centrage 12 et de la collerette périphérique 14 légèrement cônique intérieurement.

En cours d'utilisation, lors de l'égouttage et/ou acidification des fromages en cours de fabrication, le sérum excédentaire s'écoule à travers les très nombreuses ouvertures de la toile tramée 3 et à travers les très nombreux trous du fond 7, plusieurs retournements en piles étant effectués de façon à ce que l'écoulement de sérum par le fond 7 n'ait pas une influence défavorable sur le croûtage.

Lors du saumurage, la très grande perméabilité de la toile tramée 3 et du fond 7 permet un très bon échange osmotique, c'est-à-dire un transfert parfait du sel à l'intérieur du fromage et une expulsion de sérum dans le liquide de saumurage.

Le séchage des fromages après saumurage s'effectue très facilement grâce à la très grande perméabilité du bloc-moule permettant un très bon échange entre l'air du local de ressuyage et le fromage.

Dans la phase de formation du croûtage en cave, la très bonne perméabilité permet là aussi une très bonne formation du croûtage et dans le cas de la formation du croûtage avec emmorgeage, la très bonne perméabilité associée à une humidité particulière de la cave permet un ensemencement et la création de la morge.

Les seules opérations pratiquées sont des retournements mécaniques des piles sans aucune manutention des fromages ; le retournement d'une pile de bloc-moules tel que précédemment décrit permet de conserver la même configuration d'ensemble, et par conséquent le même fonctionnement, le rôle des faces inférieures et supérieures des fonds 7 étant inversé.

A cet égard, on notera la parfaite continuité de surface et la symétrie de la paroi de chaque cavité de moulage, résultant de la partie supérieure d'un moule 1 et de la partie inférieure du moule unitaire 1 immédiatement supérieur, emboîtées l'une dans l'autre comme montré sur la figure 5, ce qui évite tout marquage du talon du fromage.

De plus, dans certains cas, après saumurage, les fromages sont transportés de la fromagerie vers une cave d'affinage située à distance ; les bloc-moules selon l'invention permettent alors un transport très pratique des fromages en piles, avec un avantage très important : la tenue des fromages dans ces bloc-moules évitant ainsi toute déformation du produit.

Le bloc-moule objet de l'invention peut-être fabriqué commodément, entièrement en matière plastique, par des techniques connues de moulage et de soudage. En particulier, on peut mouler d'une seule pièce des rangées transversales de trois moules unitaires 1 (voir figure 4), puis assembler ces rangées les unes aux autres par soudage de leurs tasseaux d'assemblage 15, ces derniers pouvant être rattachés directement à certains renforts verticaux. On notera que les moules unitaires 1 peuvent être solidarisés non seulement sur les tasseaux d'assemblage 15, mais encore par soudage ou jonction d'autres parties telles que notamment leurs collerettes périphériques 14, ce qui accroît la cohésion et la rigidité du bloc-moule. La constitution de ce bloc-moule, notamment de sa partie supérieure, a aussi pour avantage de permettre, sans modification de l'outillage, de changer très facilement et économiquement le type de toile tramée 3, lors de la fabrication du bloc-moule, en fonction du type de fromage auquel est destiné ce bloc-moule.

Comme il va de soi, l'invention ne se limite pas à la seule forme d'exécution de ce bloc-moule pour la fabrication de fromages qui a été décrite ci-dessus, à titre d'exemple ; elle en embrasse, au contraire, toutes les variantes de réalisation et d'application respectant le même principe. C'est ainsi, notamment, que l'on ne s'éloignerait pas du cadre de l'invention en destinant le même bloc-moule à des fromages de section horizontale non circulaire, les contours des moules unitaires étant adaptés en conséquence, ou en remplaçant, sur la paroi latérale supérieure de ces moules unitaires, un type de toile tramée par un autre type de toile ou grille, ou encore en remplaçant sur le fond un type de perforations par tout autre type de perforations ou d'ajours ou structure équivalente permettant l'écoulement du sérum, telle que des barres du genre "store" ou "paillon", et aussi micro-perforation.

## Revendications

1. Bloc-moule à fonctions multiples pour la fabrication de fromages, plus particulièrement pour les opérations d'égouttage, d'acidification, de saumurage et de formation des croûtes, avec ou sans emmorgeage, dans la fabrication des fromages à pâte molle et/ou à pâte pressée, et/ou à pâte persillée, le bloc-moule étant constitué par l'assemblage de moules unitaires (1) dans un plan horizontal et étant lui-même empilable avec des bloc-moules identiques pour former une pile retournable, chaque moule unitaire (1) comprenant une paroi latérale supérieure (3), et un fond (7) relié à la paroi latérale (3) par un arrondi (9), et ce fond (7) étant prolongé vers le bas par une partie verticale inférieure avec un arrondi (11) opposé au précédent, une rainure annulaire d'emboîtage (13) dans laquelle la partie supérieure d'un moule unitaire (1) d'un bloc-moule inférieur vient s'emboîter, et un cône d'auto-centrage (12) prévu entre l'arrondi inférieur (11) et la rainure annulaire (13), de façon à assurer une continuité entre la paroi latérale supérieure (3) du moule (1) inférieur et l'arrondi inférieur (11) du moule (1) supérieur, **caractérisée en ce que** le fond de chaque moule unitaire (1) est un fond plat (7), perforé sur toute son étendue (en 8), et **en ce que** la paroi latérale supérieure de chaque moule unitaire (1) est constituée d'une toile tramée (3) en matière plastique très fortement ajourée, supportée par des renforts annulaires horizontaux (4, 5) reliés entre eux par des supports verticaux (6), un épaulement annulaire (10) permettant à la toile tramée (3) d'être, à son bord inférieur, encastrée et en parfaite continuité avec l'arrondi (9) reliant le fond (7) à la paroi latérale.

2. Bloc-moule pour la fabrication de fromages selon la revendication 1, **caractérisé en ce que** la toile tramée constituant la paroi latérale supérieure de chaque moule unitaire (1), est une toile tramée (3) en matière plastique très fortement ajourée, à très fort coefficient de perméabilité, qui est solidarisée de façon permanente, notamment par soudure, avec la structure à renforts annulaires (4, 5).

3. Bloc-moule pour la fabrication de fromages selon la revendication 1 ou 2, **caractérisé en ce que** la partie verticale inférieure de chaque moule unitaire (1) comporte encore une collerette périphérique d'emboîtage (14) légèrement conique intérieurement.

4. Bloc-moule pour la fabrication de fromages selon l'une quelconque des revendications 1 à 3, **caractérisé en ce que** les moules unitaires (1) sont assemblés entre eux dans un plan horizontal au moyen de tasseaux d'assemblage (15) prévus à leur périphérie, notamment des tasseaux (15) rattachés directement à certains renforts verticaux (6), et soudés entre eux.

5. Bloc-moule pour la fabrication de fromages selon l'ensemble des revendications 3 et 4, **caractérisé en ce que** les moules unitaires (1) sont solidarisés non seulement par les tasseaux d'assemblage (15), mais encore par soudage ou jonction d'autres parties, telles que notamment leurs collerettes périphériques (14).

6. Bloc-moule pour la fabrication de fromages selon la revendication 4 ou 5, **caractérisé en ce qu'**il est renforcé latéralement par des barrettes d'assemblage longitudinales (16), soudées contre les rangées longitudinales extérieures de moules unitaires (1).

## Patentansprüche

1. Multifunktions-Form zur Herstellung von Käsen, insbesondere für die Schritte des Entwässerns, der Säuerung, des Salzens und der Krustenbildung, mit oder ohne Bildung von (Rot-)Schmiere, bei der Herstellung von Käsen als weiche Paste und/oder als Presspaste und/oder als Blauschimmelpaste, wobei der Formenblock durch Zusammenfügen von Einzelformen (1) in einer horizontalen Ebene gebildet ist und wiederum stapelbar mit identischen Formenblöcken ist, um einen umkehrbaren Stapel zu bilden, wobei jede Einzelform (1) eine obere Seitenwand (3) und einen Boden (7) aufweist, der über eine Rundung (9) mit der Seitenwand (3) verbunden ist, wobei dieser Boden (7) nach unten hin verlängert ist durch einen unteren vertikalen Teil mit einer zur vorhergehenden Rundung entgegengesetzten Rundung (11), eine Eingriffs-Ringnut (13), in welche der obere Teil einer Einzelform (1) eines unteren Formenblocks eingreifen kann, und einen Selbstzentrierungskegel (12), der zwischen der unteren Rundung (11) und der Ringnut (13) vorgesehen ist, um eine Kontinuität zwischen der oberen Seitenwand (3) der unteren Form (1) und der unteren Rundung (11) der oberen Form (1) zu gewährleisten, **dadurch gekennzeichnet, dass** der Boden jeder Einzelform (1) ein über seine gesamte Ausdehnung (bei 8) gelochter Flachboden (7) ist, und dass die obere Seitenwand jeder Einzelform (1) aus einem eingeschlagenen Tuch (3) aus sehr stark gelochtem Kunststoffmaterial gebildet ist, das durch horizontale ringförmige Verstärkungen (4, 5) gestützt wird, die durch vertikale Abstützungen (6) untereinander verbunden sind, wobei eine ringförmige Schulter (10) ermöglicht, dass das eingeschlagene Tuch (3) an seinem unteren Rand eingebaut wird und mit der Rundung (9), die den Boden (7) mit der Seitenwand verbindet, vollkommen kontinuierlich ist.

2. Formenblock zur Herstellung von Käsen nach Anspruch 1, **dadurch gekennzeichnet, dass** das eingeschlagene Tuch, das die obere Seitenwand jeder Einzelform (1) bildet, ein eingeschlagenes Tuch (3) aus sehr stark gelochtem Kunststoffmaterial mit einem sehr hohen Permeabilitätskoeffizienten ist, das mit dem Gebilde der ringförmigen Verstärkungen (4, 5) dauerhaft, insbesondere durch Verschweißung, verbunden ist.

3. Formenblock für die Herstellung von Käsen nach Anspruch 1 oder 2, **dadurch gekennzeichnet, dass** der untere vertikale Teil jeder Einzelform (1) noch einen an der Innenseite leicht konischen Eingriffs-Umfangskragen (14) aufweist.

4. Formenblock für die Herstellung von Käsen nach einem der Ansprüche 1 bis 3, **dadurch gekennzeichnet, dass** die Einzelformen (1) in einer horizontalen Ebene mit Hilfe von Zusammenbau-Abstandshaltern (15) zusammengebaut sind, die an ihrem Rand vorgesehen sind, wobei die Abstandshalter (15) unmittelbar mit bestimmten vertikalen Verstärkungen (16) verbunden und untereinander verschweißt sind.

5. Formenblock für die Herstellung von Käsen nach Anspruch 3 und 4, **dadurch gekennzeichnet, dass** die Einzelformen (1) nicht nur durch die Zusammenbau-Abstandshalter (15) miteinander verbunden sind, sondern auch durch Verschweißung oder Zusammenfügung anderer Teile, wie z.B. insbesondere ihrer Umfangskrägen (14).

6. Formenblock zur Herstellung von Käsen nach Anspruch 4 oder 5, **dadurch gekennzeichnet, dass** er seitlich durch in Längsrichtung verlaufende Zusammenbaustäbe (16) seitlich verstärkt ist, die mit den in Längsrichtung angeordneten äußeren Reihen aus Einzelformen (1) verschweißt sind.

## Claims

1. A multi-function block mould for the manufacture of cheese, more particularly for the operations of drainage, acidification, salting and rind formation with or without the formation of a morge (processed rind layer), in the manufacture of soft cheese and/or pressed cheese and/or veined cheese, said block mould being formed by the assembly of unit moulds (1) in a horizontal plane and being itself stackable with identical block moulds to form a stack which can be turned over, each unit mould (I) comprising an upper sidewall (3) and a base (7) joined to the sidewall (3) by a rounded portion (9), said base (7) being extended downwards by a lower vertical part having a rounded portion (11) opposite the preceding one, an annular insertion groove (13) into which the upper part of a unit mould (1) of a lower block mould fits, and a self-centring taper (12) which is provided between the lower rounded portion (11) and the annular groove (13) in order to ensure continuity between the upper sidewall (3) of the lower mould (1) and the lower rounded portion (11) of the upper mould (1), **characterised in that** the base of each unit mould (1) is a flat base (7) which is perforated over its entire extent (at 8), and that the upper sidewall of each unit mould (1) is formed by a woven cloth (3) made of a very highly perforated plastics material supported by horizontal annular reinforcements (4, 5) joined to each other by vertical supports (6), an annular shoulder (10) enabling the woven cloth (3) to be inserted in perfect continuity at its bottom edge with the rounded portion (9) joining the base (7) to the sidewall.

2. A block mould for the manufacture of cheese according to claim 1, **characterised in that** the woven cloth forming the upper sidewall of each unit mould (1) is a woven cloth (3) made of a very highly perforated plastics material which has a very high coefficient of permeability and which is permanently integrally joined, particularly by welding, to the annular reinforcement structure (4, 5).

3. A block mould for the manufacture of cheese according to claim 1 or 2, **characterised in that** the lower vertical part of each unit mould (1) also comprises a peripheral insertion flange (14) which is slightly tapered internally.

4. A block mould for the manufacture of cheese according to one any of claims 1 to 3, **characterised in that** the unit moulds (1) are assembled with each other in a horizontal plane by means of assembly lugs (15) provided at their periphery, particularly lugs (15) which are directly attached to certain vertical reinforcements (6) and which are welded to each other.

5. A block mould for the manufacture of cheese according to claims 3 and 4 together, **characterised in that** the unit moulds (1) are integrally joined not only by the assembly lugs (15) but also by the welding or joining of other parts such as their peripheral flanges (14) in particular.

6. A block mould for the manufacture of cheese according to claims 4 or 5, **characterised in that** it is reinforced laterally by longitudinal assembly bars (16) which are welded to longitudinal external rows of unit moulds (1).
